# EUROPEAN PATENT SPECIFICATION

(11) **EP 3 854 841 B1**
(45) Date of publication and mention of the grant of the patent: **26.07.2023**
(21) Application number: 19863179.8
(22) Date of filing: 05.09.2019
(51) Int. Cl.: B29B 17/02, C08J 11/06

(54) **METHOD FOR SEPARATING AND RECOVERING LAYERED FILM**
VERFAHREN ZUR TRENNUNG UND RÜCKGEWINNUNG EINES SCHICHTFILMS
PROCÉDÉ DE SÉPARATION ET DE RÉCUPÉRATION D'UN FILM STRATIFIÉ

(30) Priority: 19.09.2018 JP 2018174909
(43) Date of publication of application: 28.07.2021
(73) Proprietor: DIC Corporation, Tokyo 174-8520 (JP)
(72) Inventor: OHARA, Shin-ichi, Tokyo 174-8520 (JP); HAMASUNA, Yutaka, Tokyo 174-8520 (JP); IWANAMI, Hideoki, Tokyo 174-8520 (JP); TAMAOKA, Takashi, Tokyo 174-8520 (JP); TAKADA, Choichi, Tokyo 103-8233 (JP)
(74) Representative: Gerauer, Marc Philippé
(86) International application number: PCT/JP2019/034942
(87) International publication number: WO 2020/059516

(56) References cited:
- WO-A1-2019/017133
- JP-A- H0 641 345
- JP-A- H06 220 243
- JP-A- H07 331 189
- JP-A- S62 109 837
- JP-A- 2008 031 399
- JP-A- 2008 031 399
- JP-A- 2010 280 122
- JP-A- 2014 019 003
- JP-A- 2014 078 009
- JP-A- 2015 000 911
- US-A- 5 308 527
- US-A- 6 001 192

## Description

### Technical Field

The present invention relates to a method for recycling a resin film laminated by a laminating method using an adhesive .

### Background Art

In recent years, the recycling of plastic container packaging has been made obligatory, and thus plastic waste including plastic waste for food packaging has been recovered, classified, and reused.
There are a variety of types of plastic waste, and examples thereof include a lot of plastic waste made of a synthetic resin such as polyethylene, polypropylene, polystyrene (foamed polystyrene), polyethylene terephthalate, or polyvinyl chloride and a number of layered films obtained by laminating films of the synthetic resin or metal foils such as aluminum foils and indicating a product name or the like or imparting decorativeness with printing ink. This plastic waste is in a mixed state during trash collection.

As the layered films, a layered film obtained by laminating a plurality of layers of films made of different types of thermoplastic resins using a plurality of extruders is known, and a device for separating the layered film into single-layered films that constitute the respective layers of the layered film has also been developed (for example, refer to Patent Literature 1).

Meanwhile, in a layered film obtained by laminating a plurality of resin films not by extrusion molding but by a laminating method using a thermoset reactive adhesive that functions by the reaction between an isocyanate compound and a polyol compound, since an adhesive layer formed after the reaction crosslinks the resin films, the lamination adhesive force is strong, and the layered film is used as, for example, a retort food packaging material requiring retort resistance or the like (refer to, for example, Patent Literature 2). Meanwhile, since the adhesive layer formed after the reaction forms a strong crosslinking layer, it is not possible to easily separate the layered film with the separation device as disclosed in Patent Literature 1.

Typically, for wasted plastic in which a thermoplastic resin and a thermosetting resin are present in a mixed form, a method for separating the wasted plastic using specific gravity and recycling the wasted plastic is known, but the easiness of the recovery of the wasted plastic varies with the resins. Particularly, in the recycling of thermosetting resins, thermal decomposition is difficult, and thus it is commonly recognized that thermosetting resins are difficult to recycle.

As a method for treating such complex waste and classifying and recovering individual components, Patent Literature 3 discloses a method for separating and recovering a plastic-based complex waste, the method including a step of using triethylene glycol as a separation solvent, adding an alkali metal hydroxide as a catalyst, and heating triethylene glycol to 250°C to 280°C, which is close to the boiling point of 200°C or higher, to melt a component P1 that is meltable in triethylene glycol, a step of dissolving or depolymerizing a component P2 that is difficult to thermally melt in the triethylene glycol heated to 250°C to 280°C under stirring to discharge the component P2 together with a solvent, a step of recovering the remaining meltable component P1 and a reinforced fiber F or a metal component M, and a step of recovering the non-melted component P2 and the separation solvent, distilling the separation solvent under reduced pressure to separate the separation solvent from the non-melted component P2, purifying and reusing the non-melted component P2.

### Citation List

### Patent Literature

PTL 1: JP 2002-96327 A
PTL 2: JP 2001-335771 A
PTL 3: JP 2006-110531 A

JP 2008-031399 A relates to a reclaiming process required in order to collect|recover chloroethylenes from the single-piece|unit or composite material containing a chloroethylene safely and reliably.

### Summary of Invention

### Technical Problem

A problem to be solved by the invention is to provide a method for separating and recovering a layered film, the method capable of easily separating a layered film that is present in plastic-based complex waste together with other substances and is laminated with a reactive adhesive into single-layered films.

### Solution to Problem

That is, the present invention is a method for separating and recovering a layered film laminated and adhered with an adhesive, the method including a step 1 of immersing the layered film in a morpholine solution having a morpholine concentration of 50% by mass or more while stirring the layered film with heating at 20°C to 90°C or ultrasonically vibrating the layered film and a step 2 of recovering separated single-layered films that constitute the respective layers of the layered film, wherein the adhesive is a reactive adhesive containing a polyisocyanate composition and a polyol composition.

### Advantageous Effects of Invention

According to the present invention, it is possible to easily separate a layered film that is present in plastic-based complex waste together with other substances and is laminated and adhered with a reactive adhesive into single-layered films and to more easily recover, classify, and reuse plastic-based complex waste in which a layered film laminated and adhered with an unreactive adhesive, for example, a thermoplastic resin adhesive, a layered film obtained by hot-melting films by an extrusion lamination method, or the like is present together with other substances.

### Description of Embodiments

A method for separating and recovering a layered film of the present invention is a method for separating and recovering a layered film laminated and adhered with an adhesive, the method including a step 1 of immersing the layered film in a morpholine solution having a morpholine concentration of 50% by mass or more while stirring the layered film with heating at 20°C to 90°C or ultrasonically vibrating the layered film and a step 2 of recovering separated single-layered films that constitute the respective layers of the layered film, wherein the adhesive is a reactive adhesive containing a polyisocyanate composition and a polyol composition.

### (Step 1)

As the morpholine solution that is used in the step 1 of the separation and recovery method of the present invention, any morpholine solutions can be used with no particular limitations as long as the morpholine (CAS No. 110-91-8) concentration is 50% by mass or more. Particularly, a morpholine solution having a morpholine concentration of 100% by mass is preferable. The morpholine solution preferably contains, in addition to morpholine, an alkaline solution such as an aqueous solution of sodium hydroxide or an aqueous solution of potassium hydroxide. The aqueous solution of sodium hydroxide or the aqueous solution of potassium hydroxide is preferably an aqueous solution having a concentration of 0.5% by mass to 10% by mass and more preferably an aqueous solution having a concentration of 1% by mass to 5% by mass. In addition, the pH is preferably 10 or more.

In addition, the morpholine solution may further contain a water-soluble organic solvent, which is preferable. "Water-soluble" for the water-soluble organic solvent means that the organic solvent dissolves in (mixes with) water in a free ratio at room temperature.

As specific examples of the water-soluble organic solvent, methyl alcohol, ethyl alcohol, propyl alcohol, isopropyl alcohol, ethylene glycol monomethyl ether (methyl cellosolve), ethylene glycol monoethyl ether (cellosolve), ethylene glycol monobutyl ether (butyl cellosolve), ethylene glycoldibutyl ether, diethylene glycol monomethyl ether (methyl carbitol), diethylene glycol dimethyl ether, diethylene glycol monoethyl ether (carbitol), diethylene glycol diethyl ether (diethyl carbitol), diethylene glycol monobutyl ether (butyl carbitol), diethylene glycol dibutyl ether, triethylene glycol monomethyl ether, triethylene glycol dimethyl ether, tetraethylene glycol dimethyl ether, methylene dimethyl ether (methylal), propylene glycol monobutyl ether, tetrahydrofuran, acetone, diacetone alcohol, acetonyl acetone, acetyl acetone, ethylene glycol monomethyl ether acetate (methyl cellosolve acetate), diethylene glycol monomethyl ether acetate (methyl carbitol acetate), diethylene glycol monoethyl ether acetate (carbitol acetate), ethyl hydroxyisobutyrate, and ethyl lactate can be exemplified, and these water-soluble organic solvents can be used singly or two or more water-soluble organic solvents can be combined together and used.

The content rate of the water-soluble organic solvent in the morpholine solution is preferably 0.1% by mass to 20% by mass and more preferably 0.1% by mass to 10% by mass.

In addition, the content rate of water in the morpholine solution is preferably 0% by mass to 50% by mass and preferably 20% by mass to 50% by mass.

In addition, the morpholine solution may further contain a water-insoluble organic solvent. As specific examples of the water-insoluble organic solvent, alcohol-based solvents such as n-butanol, 2-butanol, isobutanol, and octanol, aliphatic hydrocarbon-based solvents such as hexane, heptane, and normal paraffin, aromatic hydrocarbon-based solvents such as benzene, toluene, xylene, and alkylbenzene, halogenated hydrocarbon-based solvents such as methylene chloride, 1-chlorobutane, 2-chlorobutane, 3-chlorobutane, and carbon tetrachloride, ester-based solvents such as methyl acetate, ethyl acetate, and butyl acetate, ketone-based solvents such as methyl isobutyl ketone, methyl ethyl ketone, and cyclohexanone, and ether-based solvents such as ethyl ether and butyl ether can be exemplified, and these water-insoluble organic solvents can be used singly or two or more water-insoluble organic solvents can be combined together and used.

In addition, the morpholine solution may further contain a surfactant. Examples of the surfactant include a variety of anionic surfactants, nonionic surfactants, cationic surfactants, amphoteric surfactants, and the like, and, among these, anionic surfactants and nonionic surfactants are preferable.

Specific examples of the anionic surfactants include alkylbenzene sulfonate, alkylphenyl sulfonate, alkylnaphthalene sulfonate, higher fatty acid salt, sulfate ester salt of higher fatty acid ester, sulfonate of higher fatty acid ester, sulfate ester salt and sulfonate of higher alcohol ether, higher alkyl sulfosuccinate, polyoxyethylene alkyl ether carboxylate, polyoxyethylene alkyl ether sulfate, alkyl phosphate, polyoxyethylene alkyl ether phosphate, and the like, and, as specific examples thereof, dodecylbenzene sulfonate, isopropylnaphthalene sulfonate, monobutylphenylphenol monosulfonate, monobutylbiphenylsulfonate, dibutylphenylphenol disulfonate, and the like can be exemplified.

As specific examples of the nonionic surfactants, polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, sucrose fatty acid ester, polyoxyethylene alkylamine, polyoxyethylene fatty acid amide, fatty acid alkylolamide, alkylalkanolamide, acetylene glycol, oxyethylene adduct of acetylene glycol, polyethylene glycol polypropylene glycol block copolymer, and the like can be exemplified, and, among these, polyoxyethylene nonylphenyl ether, polyoxyethylene octylphenyl ether, polyoxyethylene dodecylphenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, oxyethylene adduct of acetylene glycol, polyethylene glycol polypropylene glycol block copolymer can be exemplified.

As other surfactants, it is also possible to use silicone-based surfactants such as polysiloxane oxyethylene adduct; fluorine-based surfactants such as perfluoroalkyl carboxylate, perfluoroalkyl sulfonates, and oxyethylene perfluoroalkyl ether; biosurfactants such as spicullisporic acid, rhamnolipid, and lysolecithin; and the like.

These surfactants can be used singly or two or more types of surfactants can be mixed together and used. In the case of adding the surfactant, the amount of the surfactant added is preferably 0.001% to 2% by mass, more preferably 0.001% to 1.5% by mass, and still more preferably 0.01% to 1% by mass with respect to the total amount of the morpholine solution.

In a state where the morpholine solution has been heated to 20°C to 90°C or ultrasonically vibrated, the layered film, which is the subject, is immersed in the morpholine solution in, for example, a treatment tank. The heating method is not particularly limited, and it is possible to adopt a well-known heating method using heat rays, infrared rays, microwaves, or the like. In addition, for the ultrasonic vibration, it is possible to adopt, for example, a method in which an ultrasonic vibrator is attached to the treatment tank and ultrasonic vibrations are imparted to the morpholine solution, a method in which ultrasonic vibrations are imparted to a heated solution, or the like.

In addition, during the immersion, the morpholine solution is preferably under stirring. Examples of the stirring method include a method in which a dispersion liquid of the layered film stored in the treatment tank is mechanically stirred with a stirring blade, a method in which the morpholine solution is stirred with water flows using a water flow pump, a bubbling method with an inert gas such as nitrogen gas, and the like, and these methods may be jointly used in order to efficiently peel a multilayered film.

The time during which the layered film is immersed in the morpholine solution also depends on the constitution of the layered film, but is typically two minutes to 48 hours in many cases. When the immersion time is shorter than two minutes, there is a concern that an adhesive layer may not completely peel off from the layered film and may partially remain. In the present invention, it is not necessary to peel off the adhesive layer 100% completely from the layered film, and the adhesive may remain in the layered film to a certain extent as long as no inconvenience is caused in a recycling step following the recovery of single-layered films in a step 2 described below. Specifically, it is necessary to peel off 80% by mass or more of the adhesive layer from the layered film.

In the step 1, regarding the number of times of immersion in the morpholine solution, the layered film may be immersed once or several times separately. That is, the step 2 of recovering separated single-layered films that constitute the respective layers of the layered film may be performed after the layered film is immersed once or the step 2 may be performed after the layered film is immersed several times. In addition, in the case of immersing the layered film a plurality of times in the step 1, the concentration of the morpholine solution may be changed or the layered film may be additionally immersed in an alkaline solution, which is preferable. Particular, in a case where the layered film contains an aluminum foil or an aluminum-deposited film, in order to easily peel or dissolve the aluminum foil or the aluminum-deposited film, the layered film may be firstly immersed in a 100% morpholine solution and secondly immersed in a solution of morpholine and an aqueous solution of sodium hydroxide (having a sodium hydroxide concentration of 0.5% by mass to 10% by mass) (1:1), and then the step 2 may be performed. Alternatively, the layered film may be firstly immersed in a 100% morpholine solution and secondly immersed in an aqueous solution of sodium hydroxide (having a sodium hydroxide concentration of 0.5% by mass to 10% by mass), and then the step 2 may be performed. In addition, it is preferable to appropriately add a well-known step such as water washing or drying between the steps.

In many cases, the layered film is provided with, in addition to the adhesive, a printing ink layer in order to indicate a product name or the like or impart decorativeness. Such a printing ink layer can also be peeled off or dissolved in the step of immersing the layered film in the morpholine solution. In addition, there is a case where a metal (aluminum) foil or a deposited film is laminated in the layered film as described above, and such a metal foil or deposited film also can be peeled off or dissolved by mixing an aqueous solution of sodium hydroxide, potassium hydroxide, or the like into the morpholine solution.

The morpholine solution that is used in the present separation and recovery method is presumed to act on the interface between the layered film and the adhesive or the printing ink to significantly reduce the adhesive force, thereby causing interfacial peeling between the layered film and the adhesive or the printing ink. Typically, there is almost no case where a coating film dissolves in a solution after the crosslinking of a reactive adhesive or the like. However, in the present invention, the morpholine solution is not intended to dissolve the layered film, but causes interfacial peeling, and thus it is presumed that the method is capable of efficiently separating and recovering the layered film within a short period of time.

### (Step 2)

The adhesive layer separated from the layered film does not dissolve in the morpholine solution, but remains in the morpholine solution in many cases. That is, in the morpholine solution in step 1, the separated single-layered films that constitute the respective layers of the layered film and the residues of the reactive adhesive, the printing ink, the metal foil, and the like float or dissolve. These substances are removed from the morpholine solution and then classified and recovered.

As an example of a specific method, for example, in a flotation method, a plastic film having a light specific gravity such as polyolefin such as polypropylene or polyethylene (floating substance), a condensation synthetic film such as polyester or nylon having a heavier specific gravity than polyolefin, and a heavy substance such as a metal foil are sorted, the heavy substance is removed, then, a plastic film recovered in a washing and dehydrating step is washed and dehydrated, and plastics having different specific gravities are classified by centrifugal separation. For example, the plastic can be classified into a plastic film separated substance including a vinyl chloride resin or polyethylene terephthalate having a specific gravity of 1 or more that sinks in water and a plastic film separated substance containing an olefin-based resin such as polyethylene or polypropylene that does not contain any vinyl chloride resins.

Additional classification is enabled by changing specific gravities by appropriately changing the mixing ratio of the liquids that are used in floating classification, for example, water and an organic solvent.

Each separated substance is dried, then, solidified, produced as a recycled product, and reused as a recycled raw material for recycled plastic.

### (Layered film)

The layered film that is the subject of the present separation and recovery method is not particularly limited and is a layered film laminated and adhered with a reactive adhesive, which is used for food packaging or housewares. However, it is needless to say that a layered film laminated and adhered with an unreactive adhesive, for example, a thermoplastic resin adhesive or a layered film obtained by hot-melting films by an extrusion lamination method can also be separated into individual single-layered films by the separation and recovery method of the present invention. That is, it is a feature of the present invention that a layered film having a variety of types of resin layers discarded by recycling can be treated altogether without any need for particular re-classification.

The layered film that is immersed in the morpholine solution in step 1 may be subjected to the immersion step in a shape that the layered film has after being discarded and recovered for recycling, but the layered film is preferably cut to a certain extent since the layered film can be efficiently separated and recovered. Specifically, a method in which the layered film is cut into chips and a method in which the layered film is cut in a strip shape are exemplified, and it is preferable to cut the layered film such that the cross section of a multilayered film comes into contact with a solution as much as possible.

In the layered film laminated and adhered with the reactive adhesive, which is the subject of the present separation and recovery method, an adhesive layer made of the reactive adhesive is often laminated between at least two resin film layers or between the resin film and a metal foil or a deposited film layer. Specifically, in the layered film, when the resin film layer is represented by (F), a metal foil layer of the metal foil or the deposited film layer is represented by (M), and the adhesive layer of the reactive adhesive is represented by (AD), the following constitutions can be considered as the specific aspects of the layered film, but it is needless to say that the layered film is not limited thereto.

(F) / (AD) / (F), (F) / (AD) / (F) / (AD) / (F), (F) / (AD) / (M) / (AD) / (F) ), (F) / (AD) / (M), (F) / (AD) / (F) / (AD) / (M) / (AD) / (F), (F) / (AD) / (M) / (AD) / (F) / (AD) / (F), (M) / (AD) / (M), (M) / (AD) / (F) / (AD) / (M) ), (AD) / (F) / (AD) / (M), (AD) / (F) / (AD) / (F) / (AD), and the like.

There is a case where the layered film, which is the subject of the present separation and recovery method, further has a paper layer, an oxygen absorption layer, an anchor coat layer, a printing layer, or the like.

When classified according to required roles, the resin film layer (F) functions as a substrate film layer (F1), a sealant layer (F2) that serves as a heat-sealing portion at the time of forming a packaging material, and the like.

For example, as a resin film that becomes the substrate film layer (F1), for example, films containing a pigment of a K coat such as polyolefin-based films such as low-density polyethylene, high-density polyethylene, linear low-density polyethylene, biaxially stretched polypropylene (OPP), and non-stretched polypropylene (CPP) ; polyester-based films such as polyethylene terephthalate (PET) and polybutylene terephthalate; polyamide-based films such as nylon 6, nylon 6,6, and meta-xylene adipamide (N-MXD6); biodegradable films such as polylactic acid; polyacrylonitrile-based films; poly(meth)acrylic films; polystyrene-based films; polycarbonate-based films; ethylene-vinyl acetate copolymer saponified substance (EVOH)-based films; polyvinyl alcohol-based films; and polyvinylidene chloride can be exemplified. As these films, a transparent deposited film on which alumina, silica, or the like is deposited may also be used.

In addition, there is a case where a variety of surface treatments such as a flame treatment, a corona discharge treatment, and a chemical treatment using a primer is performed on a surface of the film material.

As a flexible polymer film that becomes the sealant layer (F2), a polyolefin-based film such as a polyethylene film, a polypropylene film, or an ethylene-vinyl acetate copolymer, a film of an ionomer resin, an EAA resin, an EMAA resin, an EMA resin, an EMMA resin, a biodegradable resin, or the like is preferable. As generalized names, a non-stretched polypropylene (CPP) film, aluminum-deposited non-stretched polypropylene film (VMCPP), linear low-density polyethylene (LLDPE), low-density polyethylene (LDPE), high-density polyethylene (HDPE), an aluminum deposition-free low density polyethylene film (VMLDPE) film, a film containing these pigments, and the like are exemplified. A variety of surface treatments such as a flame treatment, a corona discharge treatment, and a chemical treatment using a primer may be performed on a surface of the film.

Examples of the metal foil layer (M) include foils of metal having excellent ductility such as gold, silver, copper, zinc, iron, lead, tin, an alloy thereof, steel, stainless steel, or aluminum.

As the paper layer, natural paper, synthetic paper, and the like are exemplified. There is also a case where first and second sealant layers are formed of the same material as the sealant layer.

There is also a case where "other layers" contain well-known additives or stabilizers such as an antistatic agent, an unreactive adhesive layer, an easy-adhesive coating agent, a plasticizer, a lubricant, and an antioxidant.

In the separation and recovery method of the present disclosure, layered films laminated with a non-reactive adhesive such as an aqueous emulsion are easily recovered, and particularly, the method exhibits the effect for layered films laminated with a reactive adhesive that cannot be skillfully recovered by other well-known separation and recovery methods.

The effect is exhibited particularly for so-called two-liquid type reactive adhesives containing a polyisocyanate composition and a polyol composition, and thus the two-liquid type reactive adhesives are preferable.

### (Reactive adhesive: polyisocyanate composition)

The polyisocyanate composition that is used in ordinary reactive adhesives is a composition containing a polyisocyanate compound as a main component, and any polyisocyanate compounds can be used without any particular limitations as long as the polyisocyanate compounds are known to be used for reactive adhesives. Examples of specific polyisocyanate compounds include, for example, polyisocyanates having an aromatic structure in the molecular structure such as tolylene diisocyanate, diphenylmethane diisocyanate, polymeric diphenylmethane diisocyanate, 1,5-naphthalene diocyanate, triphenylmethane triisocyanate, and xylylene diisocyanate, compounds in which some of isocyanate groups (NCO groups) of these polyisocyanates are modified with carbodiimide; polyisocyanates having an alicyclic structure in the molecular structure such as isophorone diisocyanates, 4,4'-methylenebis(cyclohexyl isocyanate), and 1,3-(isocyanatomethyl)cyclohexane, linear aliphatic polyisocyanates such as 1,6-hexamethylene diisocyanate, 1,5-pentamethylene diisocyanate, lysine diisocyanate, and trimethylhexamethylene diisocyanate, and compounds in which some of NCO groups of these polyisocyanates are modified with carbodiimide;
isocyanurate bodies of the variety of polyisocyanates; allophanate bodies derived from the variety of polyisocyanates; billet bodies derived from the variety of polyisocyanates; adduct bodies obtained by the trimethylolpropane modification of the variety of polyisocyanates; polyisocyanates that are the reaction products between the variety of polyisocyanates and a polyol component described below; and the like.

### (Reactive adhesive: polyol composition)

The polyol composition that is used in ordinary reactive adhesives is a composition containing a polyol compound as a main component, and any polyol compounds can be used without any particular limitations as long as the polyol compounds are known to be used for reactive adhesives. As examples of specific polyol compounds, for example, glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; trifunctional or tetrafunctional aliphatic alcohols such as glycerin, trimethylolpropane, and pentaerythritol; bisphenols such as bisphenol A, bisphenol F, hydrogenated bisphenol A, and hydrogenated bisphenol F; dimer diols or
polymer polyols selected from polyester polyol, polyether polyol, polyurethane polyol, polyether ester polyol, polyester(polyurethane) polyol, polyether(polyurethane) polyol, polyesteramide polyol, acrylic polyol, polycarbonate polyol, polyhydroxyl alkane, castor oil, or mixtures thereof can be exemplified.

Additionally, there is a case where, in the reactive adhesive, additives such as a pigment, a silane coupling agent, a coupling agent such as a titanate-based coupling agent or an aluminum-based coupling agent, an adhesion promoter such as an epoxy resin, a leveling agent, inorganic fine particles such as colloidal silica or alumina sol, polymethylmethacrylate-based organic fine particles, an antifoaming agent, an anti-sagging agent, a wet dispersant, a viscosity modifier, an ultraviolet absorber, a metal inactivating agent, a peroxide decomposing agent, a flame retardant, a reinforcing agent, a plasticizer, a lubricant, an anti-rust agent, a fluorescent whitening agent, an inorganic heat-ray absorber, a flameproofing agent, an antistatic agent, and a dehydrating agent are used.

In addition, as the reactive adhesive, there are an adhesive for dry lamination diluted with a highly soluble organic solvent for dilution, a solvent-free lamination adhesive containing almost no organic solvent for dilution, an aqueous adhesive for which a diluent is water, and the like, and all of the adhesives can be peeled off in the separation and recovery method of the present invention. Specific examples of the highly soluble organic solvent for dilution include toluene, xylene, methylene chloride, tetrahydrofuran, methyl acetate, ethyl acetate, n-butyl acetate, acetone, methyl ethyl ketone (MEK), cyclohexanone, toluol, n-hexane, cyclohexane, and the like. Among these, toluene, xylene, methylene chloride, tetrahydrofuran, methyl acetate, and ethyl acetate are particularly known as the highly soluble organic solvent. For the aqueous adhesive, water or an organic solvent having an affinity to water can be used as a diluting solvent.

In the reactive adhesive, regarding the blending ratio between the polyisocyanate composition and the polyol composition, ordinarily, the equivalent ratio [isocyanate group/hydroxyl group] of an isocyanate group in the polyisocyanate composition to a hydroxyl group in the polyol composition is 1.0 to 5.0 in many cases in terms of the blending ratio that is recommended for commercially available reactive adhesives. It is needless to say that, in some cases, the reactive adhesive is still used with the blending ratio outside the above-described range.

In layered films laminated and adhered with the reactive adhesive, the reactive adhesive is, for example, mixed in and then applied to a first plastic film, afterwards, a second plastic film is laminated on the coated surface, and then the reactive adhesive is subjected to an aging step or the like, whereby the reactive adhesive is cured and cross-linked in many cases.

In addition, in the layered film, there is a case where, in addition to the adhesive, a printing ink layer is provided in order to indicate a product name or the like or impart decorativeness. For the printing ink layer, a gravure printing machine, a flexographic printing machine, an offset printing machine, an inkjet printing machine, or the like is used, and an organic solvent-type printing ink, an aqueous or active energy ray-curable ink is printed in many cases. Among these, the ink that is used most often for plastic layered films such as those for food packaging is a gravure ink or a flexographic ink, and, in the present invention, the printing ink layer can also be peeled off as described above.

### (Printing ink)

A typical composition of the printing ink such as the gravure ink or the flexographic ink is a combination of a binder resin, a colorant, a solvent such as an organic solvent or an aqueous solvent, an additive, and the like.

Examples of the binder resin include a cellulose-based resin such as soluble nitrocellulose, an urethane resin, a polyamide resin, a vinyl chloride/vinyl acetate copolymer, a rosin-based resin and a modified substance thereof, a ketone resin, a cellulose-based resin, a polyester resin, a polyamide resin, an acrylic resin, and the like, and these binder resins can be appropriately combined together and used. Among these, a cellulose-based resin such as soluble nitrocellulose, an urethane resin, a polyamide resin, a vinyl chloride/vinyl acetate copolymer, and the like are appropriately combined together and used in many cases.

In addition, examples of the colorant include organic and inorganic pigments and dyes that are used for ordinary ink, paint, recording agents, and the like. Examples of the organic pigments include azo-based, phthalocyanine-based, anthraquinone-based, perylene-based, perinone-based, quinacridone-based, thioindigo-based, dioxazine-based, isoindolinone-based, quinophthalone-based, azomethine-azo-based, dictopyrrolopyrrole-based, isoindoline-based, and other pigments, and examples of inorganic pigments include carbon black, titanium oxide, zinc oxide, zinc sulfide, barium sulfate, calcium carbonate, chromium oxide, silica, colcothar, aluminum, mica (isinglass), and the like. In addition, a photoluminescent pigment (METASHINE; Nippon Sheet Glass Co., Ltd.) obtained by coating glass flakes or lump flakes as a base material with metal or metal oxide is exemplified.

As the solvent, examples of the organic solvent include an aromatic organic solvent, a ketone-based solvent such as acetone, methyl ethyl ketone, or methyl isobutyl ketone, an ester-based solvent such as ethyl acetate, n-propyl acetate, butyl acetate, propylene glycol monomethyl ether acetate, and an alcohol-based solvent such as n-propanol, isopropanol, n-butanol, and propylene glycol monomethyl ether. In addition, examples of the aqueous solvent include a solvent containing water as a main component and a water-soluble alcohol-based solvent or the like mixed thereinto.

Examples of the additive include an extender pigment, a pigment dispersant, a leveling agent, an antifoaming agent, a wax, a plasticizer, a blocking inhibitor, an infrared absorber, an ultraviolet absorber, a fragrance, a flame retardant, and the like.

Additionally, there is an ink that is increased in hardness by further adding a crosslinking agent or a chelating agent to cross-link the printing ink layer.

As described above, the morpholine solution that is used in the present separation and recovery method is presumed to act on the interface between the layered film and the adhesive or the printing ink to significantly reduce the adhesive force, thereby causing interfacial peeling. Meanwhile, since the morpholine solution also has a high solubility and thus dissolves the non-cross-linked printing ink layer. In addition, even in a case where the printing ink layer is cross-linked, since interface peeling is caused in the present invention, it is possible to efficiently separate and recover the layered film within a short period of time.

### Examples

Hereinafter, the contents and effect of the present invention will be described in more detail using examples. In addition, films, printing inks, reactive adhesives, and organic solvents that were used as raw materials in each of the examples and comparative examples will be described below.

### (Films used for layered films)

OPP: Biaxially stretched polypropylene film 20 um
PET: Polyethylene terephthalate film 12 um
OPA: Polyamide (nylon) film 15 um
CPP: Non-stretched polypropylene film 35 um
LLDPE: Non-stretched linear low-density polyethylene film 60 um
VMCPP: Aluminum-deposited non-stretched polypropylene film 25 um
AL: Aluminum foil 9 um

### (Printing ink)

Solvent-type back printing gravure ink
   Ink1: FINART R507 primary color indigo / R794S white manufactured by DIC Graphics Corporation
Solvent-type front printing gravure ink
   Ink2: GROSSA R507 primary color indigo / R794S white manufactured by DIC Graphics Corporation
Aqueous back printing flexographic ink
   Ink3: MARING ROSS R507 primary color indigo / R793 white manufactured by DIC Graphics Corporation

### (Reactive adhesives)

Solvent-type adhesives
   Ad1: DICDRY LX-401A / SP-60 manufactured by DIC Graphics Corporation
   Ad2: DICDRY LX-500 / KW-75 manufactured by DIC Graphics Corporation
Solvent-free adhesive
   Ad3: DICDRY 2K-SF-400A / HA-400B manufactured by DIC Graphics Corporation
(Unreactive aqueous adhesive)
Aqueous emulsion adhesive
   Ad4: Eportal CF701 manufactured by BASF

### (Morpholine solutions)

Morpholine "M solution": (manufactured by Kanto Kagaku, Reagent first grade)
Aqueous solution of sodium hydroxide "SH solution": A 5% by mass aqueous solution was adjusted by dissolving sodium hydroxide (reagent first grade) manufactured by Wako Pure Chemical Industries, Ltd. in ion-exchanged water.

### (Method for producing layered films)

Layered films were produced by performing printing on target films by a printing method and then laminating the target films together by a laminating method. The layer constitutions of the films, the reactive adhesives, and the types of the printing inks were determined according to the combinations in Table 1.

### <Printing method>

Each of the gravure inks and the flexographic ink, which were the printing inks, was spread on a film "Film1" using a proofer.

### <Laminating method>

A reactive adhesive "Ad" was applied with a laminator to the surface of the film "Film1" on which the printing ink had been spread or the surface opposite to the printing ink-spread surface such that the amount of a coating film reached 3 g/m² in terms of the solid content, and the film "Film 1" was laminated with a film "Film2". An aging reaction was caused in the laminated layered film at 40°C for 72 hours. In the case of a three-layer constitution, the steps were repeated to obtain layered films "LAM1" to "LAM6". The blending rates of the reactive adhesives "Ad" used were as described below.
Ad1: DICDRY LX401A / SP-60 = 1/1
Ad2: DICDRY LX-500 / KW75 = 10/1
Ad3: DICDRY 2K-SF-400A / HA-400B = 100/50
Ad4: Eportal CF701 = 100

**[Table 1]**

| Configuration of layered film | •Outer surface side ← | | | → inner surface side | | | |
|---|---|---|---|---|---|---|---|
| | Ink | Film1 | Ink | Ad | Film2 | Ad | Film3 |
| LAM1 | | PET | Ink1 | Ad1 | LLDPE | | |
| LAM2 | | PET | Ink1 | Ad2 | VMCPP | | |
| LAM3 | | OPA | Ink1 | Ad3 | LLDPE | | |
| LAM4 | Ink2 | OPP | | Ad4 | CPP | | |
| LAM5 | | OPP | Ink3 | Ad3 | CPP | | |
| LAM6 | | PET | Ink1 | Ad2 | AL | Ad2 | CPP |

| | | | | | | | |
|---|---|---|---|---|---|---|---|
| * In the table, "outer surface side" refers to a surface of the layered film opposite to a surface that comes into contact with a content when the layered film is used as a packaging body (a surface that is on the outermost side during the distribution of the product), and "inner surface side" refers to the surface that comes into contact with the content when the layered film is used as the packaging body. | | | | | | | |

### (Examples)

### (Method for separating and recovering layered film, Step 1)

The layered films "LAM1" to "LAM6" were cut into sizes of 10 mm × 10 mm to obtain test pieces. A peeling test was performed on these test pieces through Step 1-1 to Step 1-8.
Step 1-1: A stirring treatment on the M solution at 30°C
Step 1-2: A stirring treatment on the M solution at 90°C
Step 1-3: A stirring treatment on a solution of the M solution / ion-exchanged water (1/1) at 70°C
Step 1-4: A stirring treatment on a solution of the M solution / the SH solution (1/1) at 70°C
Step 1-5: A treatment on a solution of the M solution / the SH solution (1/1) with ultrasonic waves at 60°C
Step 1-6: The M solution was stirred at 50°C, then, the test piece was removed, and the SH solution was stirred at 50°C
Step 1-7: A stirring treatment on the M solution at 50°C and then a stirring treatment on the ion-exchanged water at 70°C
Step 1-8: A stirring treatment on ethyl acetate at 50°C

### (Method for separating and recovering layered film, Step 2)

After the step 1, the films were separated from the liquid by a filtration method, removed, washed with water, and then dried at 50°C.
After that, the peeling states of the films were observed. For the multilayered film including the aluminum-deposited film, the remaining of an aluminum atom in the film was confirmed with fluorescent X-rays on the peeled surface.

Table 2 and Table 3 show the results after the separation and recovery method. In the examples, the morpholine solution having a morpholine concentration of 50% by mass or more that was used in Step 1-1 to Step 1-7 was capable of peeling all of the layered films into single-layered films that constituted the respective layers of the layered films. In addition, no ink layer remained on the single-layered films.

Among Examples 9 to 13 in which the layered film having an aluminum-deposited layer was used, Examples 9 and 13 are examples in which the morpholine solution in Step 1-3 that was a mixed solution of morpholine and ion-exchanged water was used. In these examples, it was possible to isolate the single-layered films that constituted the respective layers of the layered films, but the aluminum-deposited layers remained in the films. On the other hand, Examples 10 to 12 are examples of Step 1-4 and Step 1-5 in which a mixed solution of morpholine and sodium hydroxide was used or Step 1-6 in which the stirring treatment was performed with the morpholine solution and then the treatment was performed with the aqueous solution of sodium hydroxide, and, in all of these examples, it was possible to peel off up to the aluminum-deposited layers from the films.

On the other hand, in Comparative Example 1, it was not possible to peel off the adhesive.

**[Table 2]**

| Table 2 | Example 1 | Example 2 | Example 3 | Example 4 | Example 5 | Example 6 | Example 7 | Example 8 |
|---|---|---|---|---|---|---|---|---|
| Multilayer film | LAM1 | LAM1 | LAM1 | LAM2 | LAM3 | LAM4 | LAM5 | LAM 6 |
| Step 1-1 | Peeled | | | | | | | |
| Step 1-2 | | Peeled | | Peeled | Peeled | Peeled | Peeled | Peeled |
| Step 1-3 | | | Peeled | | | | | |
| Step 1-4 | | | | | | | | |
| Step 1-5 | | | | | | | | |
| Step 1-6 | | | | | | | | |
| Step 1-7 | | | | | | | | |
| Step 1-8 | | | | | | | | |

**[Table 3]**

| Table 3 | Example 9 | Example 10 | Example 11 | Example 12 | Example 13 | Comparative Example 1 |
|---|---|---|---|---|---|---|
| Multilayer film | LAM2 | LAM2 | LAM2 | LAM2 | LAM2 | LAM1 |
| Step 1-1 | | | | | | |
| Step 1-2 | | | | | | |
| Step 1-3 | Peeled*1 | | | | | |
| Step 1-4 | | Peeled*2 | | | | |
| Step 1-5 | | | Peeled*2 | | | |
| Step 1-6 | | | | Peeled*2 | | |
| Step 1-7 | | | | | Peeled*1 | |
| Step 1-8 | | | | | | Not peeled |

| | | | | | | |
|---|---|---|---|---|---|---|
| * 1 Aluminum-deposited layer remains * 2 No aluminum-deposited layer | | | | | | |

## Claims

1. A method for separating and recovering a layered film laminated and adhered with an adhesive, the method comprising:
a step 1 of immersing the layered film in a morpholine solution having a morpholine concentration of 50% by mass or more while stirring the layered film with heating at 20°C to 90°C or ultrasonically vibrating the layered film; and
a step 2 of recovering separated single-layered films that constitute the respective layers of the layered film,
wherein the adhesive is a reactive adhesive containing a polyisocyanate composition and a polyol composition.

2. The method for separating and recovering a layered film according to claim 1,
wherein the layered film has a printing ink layer.

## Patentansprüche

1. Verfahren zum Trennen und Rückgewinnen einer geschichteten Folie, die mit einem Klebstoff laminiert und verklebt ist, wobei das Verfahren umfasst:
einen Schritt 1 des Eintauchens der geschichteten Folie in eine Morpholinlösung mit einer Morpholinkonzentration von 50 Massenprozent oder mehr, während die geschichtete Folie unter Erhitzen auf 20°C bis 90°C gerührt oder mit Ultraschall geschüttelt wird; und
einen Schritt 2 zur Gewinnung von getrennten einschichtigen Filmen, die die jeweiligen Schichten des geschichteten Films bilden,
wobei der Klebstoff ein reaktiver Klebstoff ist, der eine Polyisocyanat-Zusammensetzung und eine Polyol-Zusammensetzung enthält.

2. Verfahren zum Trennen und Rückgewinnen einer geschichteten Folie nach Anspruch 1,
wobei die geschichtete Folie eine Druckfarbenschicht aufweist.

## Revendications

1. Méthode de séparation et de récupération d'un film stratifié et collé à l'aide d'un adhésif, comprenant :
une étape 1 d'immersion du film stratifié dans une solution de morpholine ayant une concentration en morpholine de 50 % en masse ou plus, tout en remuant le film stratifié en le chauffant à une température comprise entre 20 °C et 90 °C ou en le faisant vibrer par ultrasons ; et
une étape 2 de récupération des films monocouches séparés qui constituent les couches respectives du film stratifié,
où l'adhésif est un adhésif réactif contenant une composition de polyisocyanate et une composition de polyol.

2. Procédé de séparation et de récupération d'un film stratifié selon la revendication 1,
dans lequel le film stratifié comporte une couche d'encre d'impression.
